# EUROPEAN PATENT SPECIFICATION

(11) **EP 3 479 217 B1**
(45) Date of publication and mention of the grant of the patent: **02.12.2026**
(21) Application number: 17820782.5
(22) Date of filing: 26.05.2017
(51) Int. Cl.: G06F 7/57, G06F 7/483

(54) **DOUBLE-PRECISION FLOATING-POINT OPERATION**
GLEITKOMMAOPERATIONEN MIT ZWEIFACHER PRÄZISION
OPÉRATION À VIRGULE FLOTTANTE À DOUBLE PRÉCISION

(30) Priority: 30.06.2016 US 201615199626
(43) Date of publication of application: 08.05.2019
(73) Proprietor: Altera Corporation, San Jose, CA 95134 (US)
(72) Inventor: CZAJKOWSKI, Tomasz Sebastian, Toronto Ontario M5S 2X9 (CA)
(74) Representative: Goddar, Heinz J.
(86) International application number: PCT/US2017/034707
(87) International publication number: WO 2018/004905

(56) References cited:
- WO-A2-2010/148054
- US-A- 4 612 628
- US-A1- 2006 031 272
- US-A1- 2007 043 795
- US-A1- 2007 162 535
- US-A1- 2011 055 308
- US-A1- 2012 084 533
- US-B1- 8 706 790

## Description

### BACKGROUND

The present disclosure relates generally to integrated circuits, such as field programmable gate arrays (FPGAs). More particularly, the present disclosure relates to floating-point operations implemented on an integrated circuit (e.g., an FPGA).

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Integrated circuits (ICs) take a variety of forms. For instance, field programmable gate arrays (FPGAs) are integrated circuits that are intended as relatively general-purpose devices. FPGAs may include logic that may be programmed (e.g., configured) after manufacturing to provide any desired functionality that the FPGA is designed to support. Thus, FPGAs contain programmable logic, or logic blocks, that may be configured to perform a variety of functions on the FPGAs, according to a designer's design. Many designs may benefit from floating-point operations. However, these floating-point operations are generally limited to single-precision operations or consume relatively large amounts of space in the IC for double-precision operations.

US 4 612 628 A1 discloses a floating-point unit constructed of at least two identical modules. Each module contains registers for storing floating-point data, a sign and exponent processing unit for processing the sign and exponent portions of floating-point values, and a mantissa processing unit for processing the mantissa portion. Buses allow transfer of operands from the registers to the mantissa and sign and exponent processing units and the return of the result to the registers. Interconnections between the modules and configuration logic on each module enable the modules to function as a single floating-point unit. The interconnections include connections between corresponding buses of the modules and connections between corresponding mantissa processing units. The configuration logic is responsive to position signals indicating the module's position relative to other modules in the floating-point unit and precision signals indicating the precision of the floating-point data being processed by the unit. The configuration logic enables the exponent processing unit of only the first module, and disables those of the remaining modules. The configuration logic further inhibits modules whose mantissa processing units are not required for processing a mantissa of a given precision from affecting the results produced by the remaining mantissa processor units. In modules other than the first module, the connections between corresponding buses transfer bits normally processed by the sign and exponent processor to and from the mantissa processor of an adjacent module.

### SUMMARY

The present invention is defined by the independent claims. Advantageous embodiments are described by the dependent claims. A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

Present embodiments relate to systems, methods, and devices for enhancing performance of machine-implemented programs double-precision floating-points using two digital signal processing (DSP) blocks. Specifically, the circuitry for implementing a double-precision floating-point adder uses two single-precision floating point circuitry units (e.g., digital signal processing (DSP) blocks). The DSP blocks include fixed arithmetic structures with configurable interconnects rather than general-purpose programmable logic. Furthermore, the DSP block-implemented double-precision floating-point adder may utilize two single-precision floating-point DSP blocks to implement a single logical unit that adds double-precision floating-point numbers. In other words, the double-precision floating-point adder discussed herein enables exchanging two single-floating-point addition enabled DSP blocks for one double-precision floating-point adder. Since existing circuitry may be utilized, the double-precision floating-point architecture may be overlaid on existing DSP block architectures thereby maintaining a relatively low cost of manufacture.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present invention alone or in any combination. Again, the brief summary presented above is intended only to familiarize the reader with certain aspects and contexts of embodiments of the present disclosure without limitation to the claimed subject matter.

### BRIEF DESCRIPTION OF THE DRAWINGS

Various aspects of this disclosure may be better understood upon reading the following detailed description and upon reference to the drawings in which:
FIG. 1 is a block diagram of a system that utilizes double-precision floating-point operations, in accordance with an embodiment;
FIG. 2 is a block diagram of a programmable logic device that may include logic useful for implementing the double-precision floating-point operations of FIG. 1, in accordance with an embodiment;
FIG. 3 is a flow diagram illustrating a process for using two single-precision floating-point operation circuitry units to perform the double-precision floating-point operations of FIG. 1, in accordance with an embodiment;
FIG. 4 is a block diagram depicting circuitry for performing double-precision floating-point operations including aligning and adding circuitry and normalizing and rounding circuitry, in accordance with an embodiment;
FIG. 5 is a block diagram illustrating a detailed depiction of the aligning and adding circuitry of FIG. 4, in accordance with an embodiment; and
FIG. 6 is a block diagram illustrating a detailed depiction of the normalizing and rounding circuitry of FIG. 4, in accordance with an embodiment.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

As discussed in further detail below, embodiments of the present disclosure relate generally to circuitry for implementing a double-precision floating-point adder using two single-precision floating point circuitry units (e.g., digital signal processing (DSP) blocks). DSP blocks include fixed arithmetic structures with configurable interconnects rather than general-purpose programmable logic. DSP blocks may be used for applications with high-performance and computationally intensive signal processing functions, such as finite impulse response (FIR) filtering, fast Fourier transforms (FFTs), digital up/down conversion, high-definition (HD) video processing, and HD CODECs. Furthermore, the DSP block-implemented double-precision floating-point adder may utilize two single-precision floating-point DSP blocks to implement a single logical unit that add double-precision floating-point numbers. In other words, the double-precision floating-point adder discussed herein enables exchanging two single-floating-point addition enabled DSP blocks for one double-precision floating-point adder. Since existing circuitry may be utilized, the double-precision floating-point architecture may be overlaid on existing DSP block architectures thereby maintaining a relatively low cost of manufacture. In other words, the addition of the double-precision addition capabilities without nearly no additional logic costs above an integrated circuit (IC) implementing two single-precision floating-point adders instead of the double-precision floating-point adder. While the techniques of this disclosure are described chiefly in the context of reconfigurable devices, such as programmable logic devices with field programmable gate array (FPGA) fabric, this is meant to be illustrative and not limiting. Indeed, the double-precision floating-point circuitry of this disclosure may be implemented in other integrated circuits. For example, other types of integrated circuits, such as applicant-specific integrated circuits (ASICs), microprocessors, memory devices, transceivers, and the like, may also use the double-precision floating-point circuitry of this disclosure.

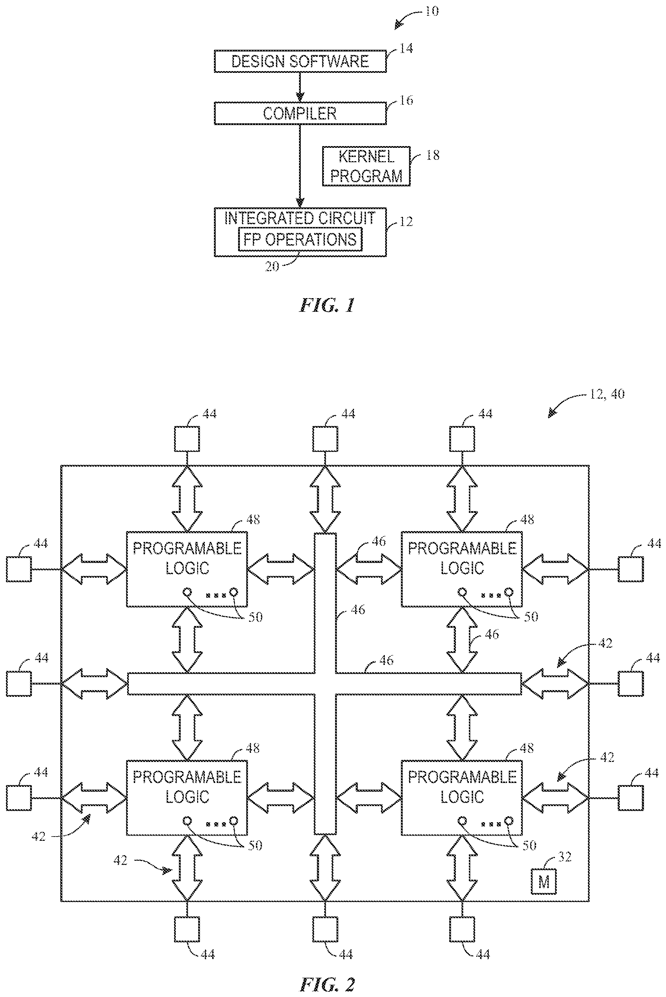

With the foregoing in mind, FIG. 1 illustrates a block diagram of a system 10 that includes floating-point operations that may reduce a logical area that is typically used for such an implementation. As discussed above, a designer may desire to implement functionality on an integrated circuit, such as a reconfigurable integrated circuit 12, such as a field programmable gate array (FPGA). The designer may implement a circuit design to be programmed onto the IC 12 using design software 14, such as a version of Quartus by Altera^{™}. The design software 14 may use a compiler 16 to generate a low-level circuit-design kernel program 18, sometimes known as a program object file or bitstream, that programs the integrated circuit 12. That is, the compiler 16 may provide machine-readable instructions representative of the circuit design to the IC 12. For example, the IC 12 may receive one or more kernel programs 18 that describe the hardware implementations that should be stored in the IC. In some embodiments, floating-point operations 20 may be implemented on the integrated circuit 12 as single-precision floating-point operations, double-precision floating-point operations, or a combination thereof. As will be described in more detail below, portions of single-precision operations may be utilized as a double-precision operation in the floating-point operations 20. For example, two DSP blocks for single-precision floating-point addition may be combined as discussed below to form a double-precision floating-point adder.

Turning now to a more detailed discussion of the IC 12, FIG. 2 illustrates an IC device 12, which may be a programmable logic device, such as a field programmable gate array (FPGA) 40. For the purposes of this example, the device 40 is referred to as an FPGA, though it should be understood that the device may be any type of programmable logic device (e.g., an application-specific integrated circuit and/or application-specific standard product). As shown, FPGA 40 may have input/output circuitry 42 for driving signals off of device 40 and for receiving signals from other devices via input/output pins 44. Interconnection resources 46, such as global and local vertical and horizontal conductive lines and buses, may be used to route signals on device 40. Additionally, interconnection resources 46 may include fixed interconnects (conductive lines) and programmable interconnects (i.e., programmable connections between respective fixed interconnects). Programmable logic 48 may include combinational and sequential logic circuitry. For example, programmable logic 48 may include look-up tables, registers, and multiplexers. In various embodiments, the programmable logic 48 may be configured to perform a custom logic function. The programmable interconnects associated with interconnection resources may be considered to be a part of programmable logic 48. As discussed in further detail below, the FPGA 40 may include adaptable logic that enables partial reconfiguration of the FPGA 40, such that kernels may be added, removed, and/or swapped during the runtime of the FPGA 40.

Programmable logic devices, such as FPGA 40, may contain programmable elements 50 within the programmable logic 48. For example, as discussed above, a designer (e.g., a customer) may program (e.g., configure) the programmable logic 48 to perform one or more desired functions. By way of example, some programmable logic devices may be programmed by configuring their programmable elements 50 using mask programming arrangements, which is performed during semiconductor manufacturing. Other programmable logic devices are configured after semiconductor fabrication operations have been completed, such as by using electrical programming or laser programming to program their programmable elements 50. In general, programmable elements 50 may be based on any suitable programmable technology, such as fuses, antifuses, electrically-programmable read-only-memory technology, random-access memory cells, mask-programmed elements, and so forth.

Most programmable logic devices are electrically programmed. With electrical programming arrangements, the programmable elements 50 may include one or more logic elements (wires, gates, registers, etc.). For example, during programming, configuration data is loaded into the memory 52 using pins 44 and input/output circuitry 42. In one embodiment, the memory 52 may be implemented as random-access-memory (RAM) cells. The use of memory 52 based on RAM technology is described herein is intended to be only one example. Moreover, memory 52 may be distributed (e.g., as RAM cells) throughout the device 40. Further, because these RAM cells are loaded with configuration data during programming, they are sometimes referred to as configuration RAM cells (CRAM). The memory 52 may provide a corresponding static control output signal that controls the state of an associated logic component in programmable logic 48. For instance, in some embodiments, the output signals may be applied to the gates of metal-oxide-semiconductor (MOS) transistors within the programmable logic 48. In some embodiments, the programmable elements 50 may include DSP blocks that implement common operations, such as single-precision floating-point adders implemented using DSP blocks.

The circuitry of FPGA 40 may be organized using any suitable architecture. As an example, the logic of FPGA 40 may be organized in a series of rows and columns of larger programmable logic regions, each of which may contain multiple smaller logic regions. The logic resources of FPGA 40 may be interconnected by interconnection resources 46 such as associated vertical and horizontal conductors. In some embodiments, these conductors may include global conductive lines that span substantially all of FPGA 40, fractional lines such as half-lines or quarter lines that span part of device 40, staggered lines of a particular length (e.g., sufficient to interconnect several logic areas), smaller local lines, or any other suitable interconnection resource arrangement. Moreover, in further embodiments, the logic of FPGA 40 may be arranged in more levels or layers in which multiple large regions are interconnected to form still larger portions of logic. Still further, some device arrangements may use logic that is arranged in a manner other than rows and columns.

As discussed above, the FPGA 40 may allow a designer to create a customized design capable of executing and performing customized functionalities. Each design may have its own hardware implementation to be implemented on the FPGA 40. These hardware implementations may include floating-point operations using the DSP blocks programmable elements 50.

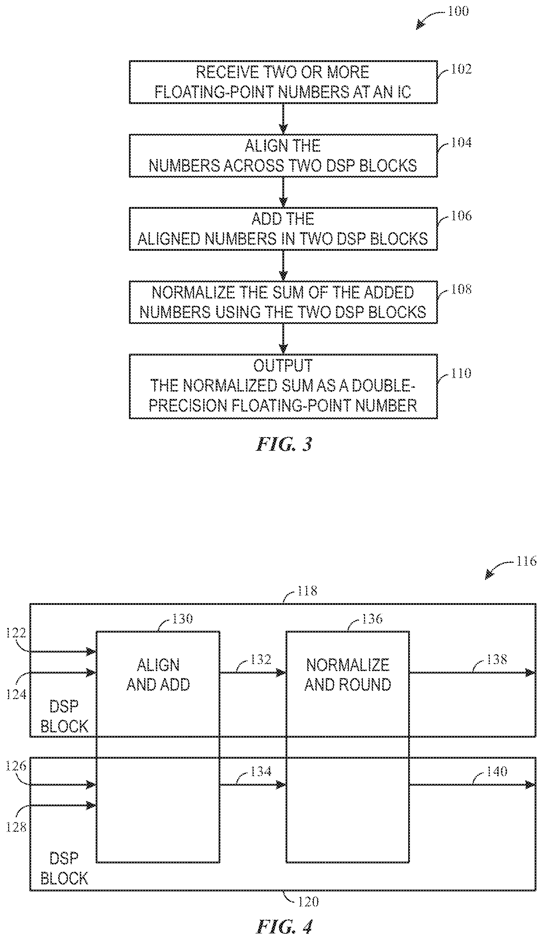

FIG. 3 illustrates a process 100 for adding two floating-point numbers to obtain a double-precision floating-point result. The IC 12 receive two or more floating-point numbers to be operated on (e.g., added) (block 102). In some embodiments, these numbers may be the result of a logical operation in the IC 12 from some other portion of the programmable logic 48. For example, the received floating-point numbers may be the result of previous calculations. Furthermore, the floating-point numbers may be single-precision or double-precision floating-point numbers. As described below, a first portion (e.g., most significant digits of the mantissa) of the floating-point numbers may be passed to a first DSP block and a second portion (e.g., least significant digits of the mantissa) of the floating-point numbers may be passed to the second DSP block. In some embodiments, the floating-point numbers are aligned across the two DSP blocks (block 104). Specifically, the IC 12 matches the exponent between the two floating-point numbers by increasing or decreasing one of the exponents to match the other exponent by shifting digits around. As noted below, if an exponent is increased, a leading zero is moved left and a digit is moved from the first DSP block to the second DSP block to compensate for such movement of the leading zero. Similarly, if an exponent is decreased, the leading zero is moved right and a digit is moved from the second DSP block to the first DSP block. Once the numbers are aligned, the aligned numbers are added together using the two DSP blocks (block 108). Moreover, a portion of the addition is done in the first DSP block and the remainder is done in the second DSP block.

Once the numbers have been added, the sum of the addition is normalized using the two DSP blocks (block 108). Specifically, the exponent is shifted to cause a leading value to be a one. Such shifting of the exponent may be similar to the exponent shifting discussed in relation to the alignment of input floating-point numbers. The normalized sum is output as a double-precision floating-point number (block 110). For example, a first portion (e.g. most significant 32 bits) of the normalized sum may be output from the first DSP block and a second portion (e.g., less significant 32 bits) of the normalized sum may be output from the second DSP block. In other words, each DSP block may do a partial addition and output a partial sum that may be concatenated together to form a complete sum.

FIG. 4 illustrates an embodiment of double-precision floating-point adder 116 that includes two DSP blocks 118 and 120. The first DSP block 118 includes two inputs 122 and 124, and the second DSP block 120 includes two inputs 126 and 128. Input 122 may receive a first portion of a first floating-point number, and input 124 receives a first portion of a second floating-point number. For example, the first 32 bits (including the sign and exponent and a portion of the mantissa) of a 64-bit double-precision floating-point number may be received at the input 122. Similar portions of another double-precision floating-point number may be received at the input 124. Although the illustrated example includes two numbers, in some embodiments, additional numbers may be added using multiplexers to add various numbers sequentially.

A second portion (e.g., remainder of mantissa) of the first floating-point number may be received at the input 126, and a second portion (e.g., remainder of mantissa) of the second floating-point number may be received at the input 128. The numbers are submitted to aligning and adding circuitry 130 that aligns the exponents of the numbers. As discussed below, during the alignment step bits may be exchanged between the first and second DSP blocks 118 and 120 according to shifts in each number to align the exponents of the numbers. Partial sums 132 and 134 are then passed to normalizing and rounding circuitry 136. As discussed below, the partial sum 132 is shifted to normalize the first portion of a double-precision floating-point number sum and digits are shifted to the partial sum 134 in the second DSP block 120 from the partial sum 132 in the first DSP block 118 or vice versa. After normalization and rounding, normalized partial sums 138 and 140 are output from the DSP blocks 118 and 120. These normalized partial sums may be concatenated together to form a double-precision floating-point number sum of the input floating-point numbers.

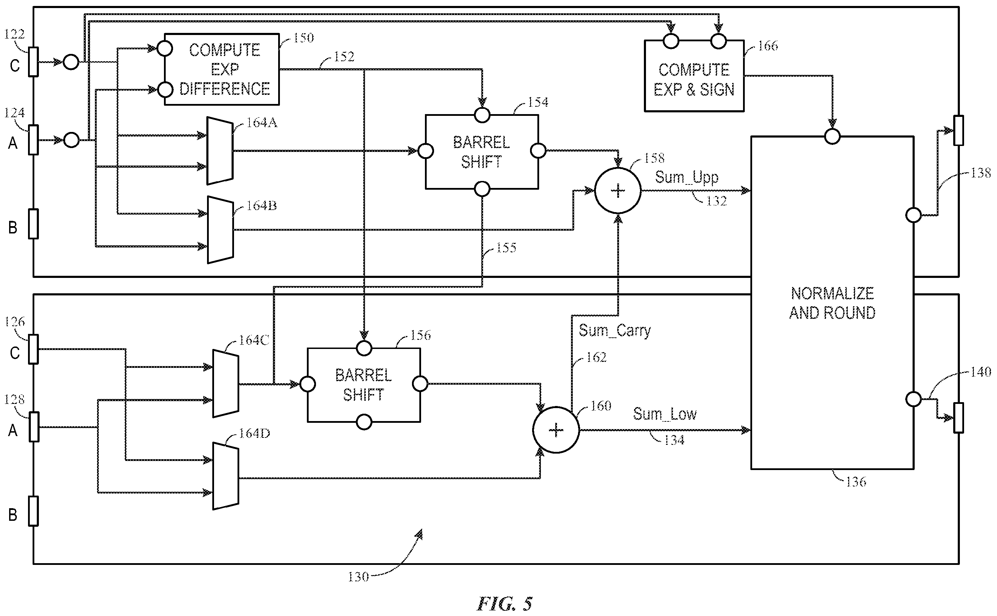

FIG. 5 illustrates a more detailed depiction of the aligning and adding circuitry 130 of FIG. 4. As illustrated, the upper portions (i.e., bits) of the numbers input to inputs 122 and 124 are used to determine an exponent difference between the input numbers using exponent difference computation circuitry 150. In some embodiments, the double-precision floating-point numbers have specific bits that indicate an exponent of the number. For example, the second through twelfth bits may be used to indicate a sign of the number. These bits may be subtracted to determine the difference 152 between the exponents of the two numbers. Upon determination of the difference in the exponents, the difference 152 may be used to determine how many bits are to be shifted between the DSPs 118 and 120. In other words, a certain number of bits (e.g., 21) may be allocated to the first DSP 118 and the remainder (e.g., 32) allocated to the second DSP 120. However, when the two numbers being added are not aligned before processing one or both of these numbers may need to shift to align with the other. Thus, this shift may send some bits from the second DSP 120 to the first DSP 118 or from the first DSP 118 to the second DSP 120. A barrel shifter 154 may be used to shift extra bits 155 from the DSP 120 to the first DSP 118 when the shift in the barrel shifter 154 shifts up dropping off digits from the upper end while pulling in lower digits from the DSP 120. In some embodiments, the amount of bits shifted may be limited to a specific amount, such as the total number (e.g., 21) of bits in the upper portion of the mantissa passed to the DSP 118.

When a number of digits are shifted from the DSP 120 to the DSP 118 using the barrel shifter 154, the number in the DSP 118 are shifted by the same number in the same direction. Specifically, a barrel shifter 156 in the DSP 118 makes a similar shift in the same direction to those values submitted to the DSP 120 via the inputs 126 or 128. These shifted in values may be set to a set value (e.g., 0 or 1). In other words, the digits shifted to the barrel shifter 157 are shifted off of the stack of lower digits using the barrel shifter 156. Thus, the barrel shifters 154 and 156 shift digits in substantially in synchronized steps to align digits in the upper and lower portions in the mantissa of one number to align with the other number being processed. In some embodiments, both numbers are shifted to align with each other. The upper portions of the mantissas of the two numbers are added in a first adder 158 while lower portions of the mantissas of the two numbers are added in a second adder 160. When addition of the lower portions of the mantissas creates a carry bit 162, the carry bit 162 is added in the first adder 158.

The aligning and adding circuitry 130 also includes multiplexers 164 that enable usage of upper or lower portions of the mantissa of different numbers to be processed without redundant circuitry thereby saving space and costs of circuitry for processing double-precision floating-points numbers. In some embodiments (e.g., for the sake of speed), the multiplexers 164 may be omitted with additional circuitry (e.g., barrel shifters, lines to adders, etc.) After the aligning and adding circuitry 130 has aligned and added the numbers, the sum is split into the upper mantissa 132 and the lower mantissa 134.

The aligning and adding circuitry 130 also includes compute exponent and sign exponent that determines an exponent and sign of the resulting added numbers. For example, if the sign of both input numbers are the same, the sign may be the same as the sign of both input numbers. If the sign of the numbers are different, the sign of the larger number may be used for the sum. The exponent may match the exponent of a value to which one or more numbers are aligned. For example, if a first number with an exponent of 10⁹ and a second number with an exponent of 10¹⁰, the two numbers may be aligned to 10⁹ and the resultant sum (prior to normalization) may also have an exponent of 10⁹.

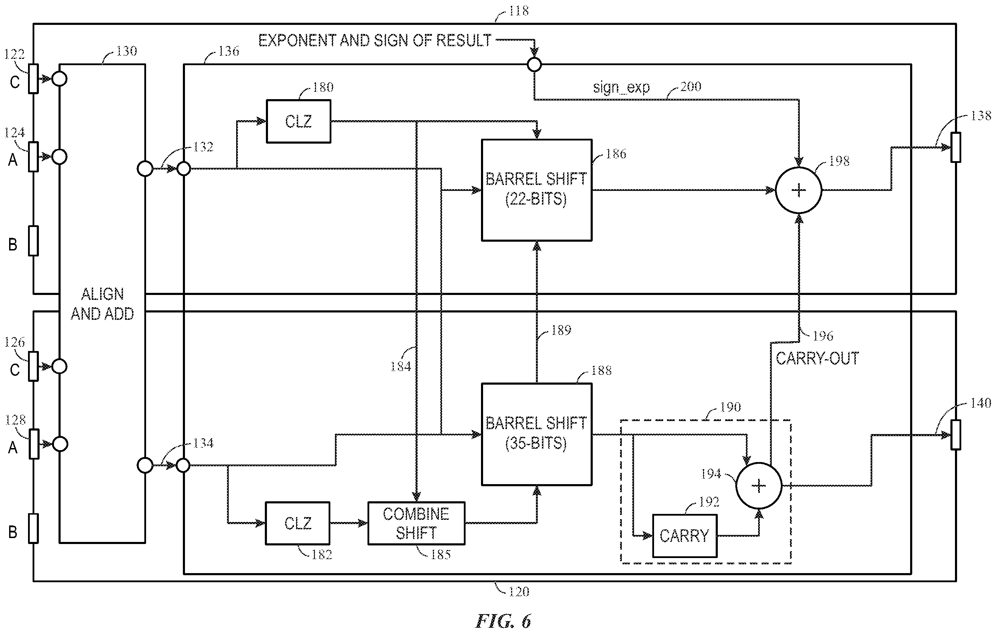

FIG. 6 illustrates a more detailed depiction of the normalizing and rounding circuitry 136. The normalizing and rounding circuitry 136 receives the upper mantissa 132 and the lower mantissa 134 of the sum from the aligning and adding circuitry 130. The upper mantissa 132 and the lower mantissa 134 are then submitted to calculating leading zeroes (CLZ) circuitries 180 and 182, respectively, to determine how many leading zeroes exist in each the upper mantissa 132 and the lower mantissa 134. If zeroes lead the upper mantissa 132, the number of zeroes is designated as a shift number 184. If the shift number 184 is equal to the number of digits in the upper mantissa 132, the results from the CLZ circuitries 180 and 182 are added together to form a combined shift 185. That indicates exactly how many digits are shifted from the DSP 120 to the DSP 118. The shifting may be performed using barrel shifters 186 and 188 to the upper and lower mantissas, respectively. Digits 189 may be shifted between the barrel shifters 186 and 188.

The normalizing and rounding circuitry 136 includes rounding circuitry 190 that takes a number (e.g., three) the lowest digits that are truncated from the lower mantissa. If the truncated values include a value that should be rounded up (e.g., greater than one-half of the possible values), a carry bit 192 is added to the lower mantissa using an adder 194. If the carry bit 192 results in a carry-out 196, this carry-out 196 is added to the upper mantissa using an adder 198. The carry-out 196, the upper mantissa, and a sign_exponent signal 200 are added to form the upper portion of a double-precision floating-point as the partial sum 138. The sign_exponent signal 200 includes a sign for the resulting sum and the resulting exponent from the aligning and adding circuitry 130 along with zeroes completing the remainder of the sign_exponent signal 200 so that when the sign_exponent signal 200 is added with the upper mantissa and the potential carry-out 196 to form the partial sum 138 of the double-precision floating-point number.

The lower portion of the mantissa added to the carry-bit 192, if present, results in the lower bits (e.g., 32 bits) of the double-precision floating-point number as the partial sum 140 that when concatenated with the partial sum 138 results in a complete double-precision floating-point number using the two DSPs 118 and 120 that are each individually capable of completing single-precision floating-point operations but may be arranged to perform double-precision floating-point operations as illustrated in the foregoing embodiments. Thus, double-precision floating-point operations may be implemented on an IC that previously included single-precision floating-point operations without changing the DSP blocks or requiring additional circuitry.

Through common floating-point operations elements between single-precision and double-precision DSPs, an IC with such floating-point operations elements has increased flexibility in the IC device to perform single-precision or double-precision floating-point operations without redesigning the DSPs or using different DSP types specific to an floating-point precision level.

While the embodiments set forth in the present disclosure may be susceptible to various modifications and alternative forms, specific embodiments have been shown in the drawings and have been described in detail herein. However, it should be understood that the disclosure is not intended to be limited to the particular forms disclosed.

## Claims

1. A method, comprising:
receiving two or more floating-point numbers in a double-precision format;
performing mathematical operations on the floating-point numbers using two digital signal processing, DSP, blocks (118, 120), wherein the two DSP blocks (118, 120) are individually capable of performing mathematical operations on single-precision floating-point numbers and wherein the two DSP blocks (118, 120) are individually incapable of performing mathematical operations on double-precision floating-point numbers; and
outputting an output floating-point number in the double-precision format,
wherein performing mathematical operations on the floating-point numbers comprises adding the two or more floating-point numbers in the double-precision format, and adding the two or more floating-point numbers comprises aligning the floating-point numbers across the two DSP blocks (118, 120),
wherein aligning the two or more floating-point numbers comprises:
determining a difference in exponents between the two or more floating-point numbers, wherein the difference in exponents between the two or more floating-point numbers is determined by using an exponent difference computation circuitry (150), and wherein the exponent difference computation circuitry (150) is present in only one of the two DSP blocks (118, 120);
based on the difference in exponents, shifting an upper portion of at least one of the two or more floating-point numbers using a first shifter in a first DSP block (118) of the two DSP blocks (118, 120); and
based on the difference in exponents, shifting a lower portion of at least one of the two or more floating-point numbers using a second shifter in a second DSP block (120) of the two DSP blocks (118, 120).

2. The method of claim 1, wherein receiving the two or more floating-point numbers in the double-precision format comprises:
receiving a first portion of each of the two or more floating-point numbers at the first DSP block (118) of the two DSP blocks (118, 120); and
receiving a second portion of each of the two or more floating-point numbers at the second DSP block (120) of the two DSP blocks (118, 120).

3. The method of claim 2, wherein the first portion of each of the two or more floating-point numbers comprises:
a sign for a respective floating-point number;
an exponent for the respective floating-point number; and
an upper portion of a mantissa (132, 134) for the respective floating-point number.

4. The method of claim 2, wherein the second portion of each of the two or more floating-point numbers comprises a lower portion of a mantissa (132, 134) for a respective floating-point number.

5. The method of claim 1, wherein the shift in the first shifter includes shifting in values that are shifted out of the lower portion using the second shifter.

6. The method of claim 1, wherein the shift in the second shifter comprises:
shifting in a number of digits a set value to concatenate onto a lower end of the lower portion; and
shifting out the number of digits from a higher end of the lower portion.

7. The method of claim 1, wherein the two DSP blocks (118, 120) are each capable of providing no more precision than a single-precision floating-point number alone.

8. The method of claim 1 or 7, wherein outputting the output floating-point number in the double-precision format comprises:
outputting a first portion of the output floating-point number in the double-precision format from the first DSP block (118) of the two DSP blocks (118, 120); and
outputting a second portion of the output floating-point number in the double-precision format from the second DSP block (120) of the two DSP blocks (118, 120).

9. An integrated circuit device (12) comprising:
aligning and adding circuitry (130) comprising:
exponent difference computation circuitry (150) configured to determine a difference between exponents of two or more double-precision floating-point numbers, wherein the exponent difference computation circuitry (150) is present in only one of two digital signal processing, DSP, blocks (118, 120);
a first shifter in a first DSP block (118) of the two DSP blocks (118, 120), the first shifter being configured to shift an upper portion of at least one of the two or more double-precision floating-point numbers based on the difference; and
a second shifter in a second DSP block (120) of the two DSP blocks (118, 120), the second shifter being configured to shift a lower portion of at least one of the two or more double-precision floating-point numbers based on the difference,
the aligning and adding circuitry (130) being configured to:
align a first portion of the two or more double-precision floating-point numbers in the first DSP block (118) of the two DSP blocks (118, 120), wherein each of the two DSP blocks (118, 120) includes elements that enable each of the two DSP blocks (118, 120) to individually operate on single-precision floating-point numbers, and wherein the two DSP blocks (118, 120) are individually incapable of performing mathematical operations on double-precision floating-point numbers;
align a second portion of the two or more double-precision floating-point numbers in the second DSP block (120) of the two DSP blocks;
add the aligned first portions of the two or more double-precision floating-point numbers to generate a first partial sum using a first adder in the first DSP block (118); and
add the aligned second portions of the two or more double-precision floating-point numbers to generate a second partial sum using a second adder in the second DSP block (120); and
an output node configured to output the first partial sum and the second partial sum to be concatenated together to form the sum.

10. The integrated circuit device (12) of claim 9 comprising normalizing and rounding circuitry (136) configured to:
normalize the sum; and
round the normalized sum.

11. The integrated circuit device (12) of claim 10, wherein normalizing the sum comprises:
determining a number of leading zeroes in the sum; and
shifting the sum by the number of leading zeroes to remote the leading zeroes.

12. The integrated circuit device (12) of claim 11, wherein shifting the sum comprises:
shifting a first partial sum corresponding to upper digits in the sum in the first shifter in the first DSP block (118) of the two DSP blocks (118, 120); and
shifting a second partial sum corresponding to lower digits in the sum in the second shifter in the second DSP block (120) of the two DSP blocks (118, 120).

## Patentansprüche

1. Verfahren, das Folgendes umfasst:
Empfangen von zwei oder mehr Gleitkommazahlen in einem Format mit doppelter Genauigkeit;
Durchführen mathematischer Operationen an den Gleitkommazahlen unter Verwendung von zwei Digitalsignalverarbeitungsblöcken, DSP-Blöcken (118, 120), wobei die zwei DSP-Blöcke (118, 120) einzeln in der Lage sind, mathematische Operationen an Gleitkommazahlen mit einfacher Genauigkeit durchzuführen, und wobei die zwei DSP-Blöcke (118, 120) einzeln nicht in der Lage sind, mathematische Operationen an Gleitkommazahlen mit doppelter Genauigkeit durchzuführen; und
Ausgeben einer Ausgabe-Gleitkommazahl in dem Format mit doppelter Genauigkeit,
wobei das Durchführen mathematischer Operationen an den Gleitkommazahlen das Addieren der zwei oder mehr Gleitkommazahlen in dem Format mit doppelter Genauigkeit umfasst und das Addieren der zwei oder mehr Gleitkommazahlen das Ausrichten der Gleitkommazahlen über die zwei DSP-Blöcke (118, 120) umfasst,
wobei das Ausrichten der zwei oder mehr Gleitkommazahlen Folgendes umfasst:
Bestimmen einer Differenz von Exponenten zwischen den zwei oder mehr Gleitkommazahlen, wobei die Differenz von Exponenten zwischen den zwei oder mehr Gleitkommazahlen unter Verwendung einer Exponentendifferenz-Berechnungsschaltungsanordnung (150) bestimmt wird und wobei die Exponentendifferenz-Berechnungsschaltungsanordnung (150) in nur einem der zwei DSP-Blöcke (118, 120) vorhanden ist;
basierend auf der Differenz von Exponenten Verschieben eines oberen Teils mindestens einer der zwei oder mehr Gleitkommazahlen unter Verwendung eines ersten Verschiebers in einem ersten DSP-Block (118) der zwei DSP-Blöcke (118, 120); und
basierend auf der Differenz von Exponenten Verschieben eines unteren Teils mindestens einer der zwei oder mehr Gleitkommazahlen unter Verwendung eines zweiten Verschiebers in einem zweiten DSP-Block (120) der zwei DSP-Blöcke (118, 120).

2. Verfahren nach Anspruch 1, wobei das Empfangen der zwei oder mehr Gleitkommazahlen in dem Format mit doppelter Genauigkeit Folgendes umfasst:
Empfangen eines ersten Teils jeder der zwei oder mehr Gleitkommazahlen an dem ersten DSP-Block (118) der zwei DSP-Blöcke (118, 120); und
Empfangen eines zweiten Teils jeder der zwei oder mehr Gleitkommazahlen an dem zweiten DSP-Block (120) der zwei DSP-Blöcke (118, 120).

3. Verfahren nach Anspruch 2, wobei der erste Teil jeder der zwei oder mehr Gleitkommazahlen Folgendes umfasst:
ein Vorzeichen für eine jeweilige Gleitkommazahl;
einen Exponenten für die jeweilige Gleitkommazahl; und
einen oberen Teil einer Mantisse (132, 134) für die jeweilige Gleitkommazahl.

4. Verfahren nach Anspruch 2, wobei der zweite Teil jeder der zwei oder mehr Gleitkommazahlen einen unteren Teil einer Mantisse (132, 134) für eine jeweilige Gleitkommazahl umfasst.

5. Verfahren nach Anspruch 1, wobei die Verschiebung in dem ersten Verschieber ein Hineinschieben von Werten beinhaltet, die unter Verwendung des zweiten Verschiebers aus dem unteren Teil verschoben werden.

6. Verfahren nach Anspruch 1, wobei die Verschiebung in dem zweiten Verschieber Folgendes umfasst:
Hineinschieben einer Anzahl von Ziffern eines vorgegebenen Werts, um sie an ein unteres Ende des unteren Teils anzuhängen; und
Herausschieben der Anzahl von Ziffern aus einem höheren Ende des unteren Teils.

7. Verfahren nach Anspruch 1, wobei die zwei DSP-Blöcke (118, 120) jeweils in der Lage sind, nicht mehr Genauigkeit als eine Gleitkommazahl mit einfacher Genauigkeit allein bereitzustellen.

8. Verfahren nach Anspruch 1 oder 7, wobei das Ausgeben der Ausgabe-Gleitkommazahl in dem Format mit doppelter Genauigkeit Folgendes umfasst:
Ausgeben eines ersten Teils der Ausgabe-Gleitkommazahl in dem Format mit doppelter Genauigkeit aus dem ersten DSP-Block (118) der zwei DSP-Blöcke (118, 120); und
Ausgeben eines zweiten Teils der Ausgabe-Gleitkommazahl in dem Format mit doppelter Genauigkeit aus dem zweiten DSP-Block (120) der zwei DSP-Blöcke (118, 120).

9. Integrierte Schaltungsvorrichtung (12), die Folgendes umfasst:
eine Ausrichtungs- und Additionsschaltungsanordnung (130), die Folgendes umfasst:
eine Exponentendifferenz-Berechnungsschaltungsanordnung (150), die dazu ausgelegt ist, eine Differenz zwischen Exponenten von zwei oder mehr Gleitkommazahlen mit doppelter Genauigkeit zu bestimmen, wobei die Exponentendifferenz-Berechnungsschaltungsanordnung (150) in nur einem von zwei Digitalsignalverarbeitungsblöcken, DSP-Blöcken (118, 120), vorhanden ist;
einen ersten Verschieber in einem ersten DSP-Block (118) der zwei DSP-Blöcke (118, 120), wobei der erste Verschieber dazu ausgelegt ist, einen oberen Teil mindestens einer der zwei oder mehr Gleitkommazahlen mit doppelter Genauigkeit basierend auf der Differenz zu verschieben; und
einen zweiten Verschieber in einem zweiten DSP-Block (120) der zwei DSP-Blöcke (118, 120), wobei der zweite Verschieber dazu ausgelegt ist, einen unteren Teil mindestens einer der zwei oder mehr Gleitkommazahlen mit doppelter Genauigkeit basierend auf der Differenz zu verschieben,
wobei die Ausrichtungs- und Additionsschaltungsanordnung (130) zu Folgendem ausgelegt ist:
Ausrichten eines ersten Teils der zwei oder mehr Gleitkommazahlen mit doppelter Genauigkeit in dem ersten DSP-Block (118) der zwei DSP-Blöcke (118, 120), wobei jeder der zwei DSP-Blöcke (118, 120) Elemente aufweist, die ermöglichen, dass jeder der zwei DSP-Blöcke (118, 120) einzeln mit Gleitkommazahlen mit einfacher Genauigkeit arbeitet, und wobei die zwei DSP-Blöcke (118, 120) einzeln nicht in der Lage sind, mathematische Operationen an Gleitkommazahlen mit doppelter Genauigkeit durchzuführen;
Ausrichten eines zweiten Teils der zwei oder mehr Gleitkommazahlen mit doppelter Genauigkeit in dem zweiten DSP-Block (120) der zwei DSP-Blöcke;
Addieren der ausgerichteten ersten Teile der zwei oder mehr Gleitkommazahlen mit doppelter Genauigkeit, um unter Verwendung eines ersten Addierers in dem ersten DSP-Block (118) eine erste Teilsumme zu erzeugen; und
Addieren der ausgerichteten zweiten Teile der zwei oder mehr Gleitkommazahlen mit doppelter Genauigkeit, um unter Verwendung eines zweiten Addierers in dem zweiten DSP-Block (120) eine zweite Teilsumme zu erzeugen; und
einen Ausgabeknoten, der dazu ausgelegt ist, die erste Teilsumme und die zweite Teilsumme auszugeben, die aneinanderzuhängen sind, um die Summe zu bilden.

10. Integrierte Schaltungsvorrichtung (12) nach Anspruch 9, die eine Normalisierungs- und Rundungsschaltungsanordnung (136) umfasst, die zu Folgendem ausgelegt ist:
Normalisieren der Summe; und
Runden der normalisierten Summe.

11. Integrierte Schaltungsvorrichtung (12) nach Anspruch 10, wobei das Normalisieren der Summe Folgendes umfasst:
Bestimmen einer Anzahl führender Nullen in der Summe; und
Verschieben der Summe um die Anzahl führender Nullen, um die führenden Nullen zu entfernen.

12. Integrierte Schaltungsvorrichtung (12) nach Anspruch 11, wobei das Verschieben der Summe Folgendes umfasst:
Verschieben einer ersten Teilsumme, die oberen Ziffern in der Summe entspricht, in dem ersten Verschieber in dem ersten DSP-Block (118) der zwei DSP-Blöcke (118, 120);
und
Verschieben einer zweiten Teilsumme, die unteren Ziffern in der Summe entspricht, in dem zweiten Verschieber in dem zweiten DSP-Block (120) der zwei DSP-Blöcke (118, 120).

## Revendications

1. Procédé comprenant les étapes suivantes :
recevoir deux nombres à virgule flottante, ou davantage, dans un format à double précision ;
effectuer des opérations mathématiques sur les nombres à virgule flottante au moyen de deux blocs de traitement de signal numérique, DSP (118, 120), les deux blocs DSP (118, 120) étant individuellement capables d'effectuer des opérations mathématiques sur des nombres à virgule flottante à simple précision et les deux blocs DSP (118, 120) étant individuellement incapables d'effectuer des opérations mathématiques sur des nombres à virgule flottante à double précision ; et
délivrer en sortie un nombre à virgule flottante de sortie dans le format à double précision,
où la réalisation d'opérations mathématiques sur les nombres à virgule flottante comprend d'ajouter les deux nombres à virgule flottante, ou davantage, dans le format à double précision, et l'ajout des deux nombres à virgule flottante, ou davantage, comprend d'aligner les nombres à virgule flottante sur les deux blocs DSP (118, 120),
**caractérisé en ce que** l'alignement des deux nombres à virgule flottante, ou davantage, comprend les étapes suivantes :
déterminer une différence d'exposants entre les deux nombres à virgule flottante, ou davantage, la différence d'exposants entre les deux nombres à virgule flottante, ou davantage, étant déterminée à l'aide de circuits de calcul de différence d'exposants (150), et les circuits de calcul de différence d'exposants (150) étant présent uniquement dans un seul des deux blocs DSP (118, 120) ;
sur la base de la différence des exposants, décaler une partie supérieure d'au moins un des deux nombres à virgule flottante, ou davantage, au moyen d'un premier dispositif de décalage dans un premier bloc DSP (118) parmi les deux blocs DSP (118, 120) ; et
sur la base de la différence des exposants, décaler une partie inférieure d'au moins un des deux nombres à virgule flottante, ou davantage, au moyen d'un deuxième dispositif de décalage dans un deuxième bloc DSP (120) parmi les deux blocs DSP (118, 120).

2. Procédé selon la revendication 1, dans lequel la réception des deux nombres à virgule flottante, ou davantage, dans le format à double précision comprend les étapes suivantes :
recevoir une première partie de chacun des deux nombres à virgule flottante, ou davantage, au niveau du premier bloc DSP (118) parmi les deux blocs DSP (118, 120) ; et
recevoir une deuxième partie de chacun des deux nombres à virgule flottante, ou davantage, au niveau du deuxième bloc DSP (120) parmi les deux blocs DSP (118, 120).

3. Procédé selon la revendication 2, dans lequel la première partie de chacun des deux nombres à virgule flottante, ou davantage, comprend :
un signe pour un nombre à virgule flottante respectif ;
un exposant pour le nombre à virgule flottante respectif ; et
une partie supérieure d'une mantisse (132, 134) pour le nombre à virgule flottante respectif.

4. Procédé selon la revendication 2, dans lequel la deuxième partie de chacun des deux nombres à virgule flottante, ou davantage, comprend une partie inférieure d'une mantisse (132, 134) pour un nombre à virgule flottante respectif.

5. Procédé selon la revendication 1, dans lequel le décalage dans le premier dispositif de décalage comprend le décalage de valeurs qui sont décalées hors de la partie inférieure en utilisant le deuxième dispositif de décalage.

6. Procédé selon la revendication 1, dans lequel le décalage dans le deuxième dispositif de décalage comprend les étapes suivantes :
introduire par décalage un certain nombre de chiffres correspondant à une valeur définie afin de concaténer cette valeur à l'extrémité inférieure de la partie inférieure ; et
décaler le nombre de chiffres hors de l'extrémité supérieure de la partie inférieure.

7. Procédé selon la revendication 1, dans lequel les deux blocs DSP (118, 120) sont chacun capables de fournir au plus une précision correspondant à celle d'un nombre en virgule flottante à simple précision pris isolément.

8. Procédé selon les revendications 1 ou 7, dans lequel délivrer en sortie le nombre à virgule flottante de sortie dans le format à double précision comprend les étapes suivantes :
délivrer en sortie une première partie du nombre à virgule flottante de sortie dans le format à double précision à partir du premier bloc DSP (118) parmi les deux blocs DSP (118, 120) ; et
délivrer en sortie une deuxième partie du nombre à virgule flottante de sortie dans le format à double précision à partir du deuxième bloc DSP (120) parmi les deux blocs DSP (118, 120).

9. Dispositif à circuit intégré (12) comprenant :
des circuits d'alignement et d'ajout (130) comprenant :
des circuits de calcul de différence d'exposants (150) configurés pour déterminer une différence entre des exposants de deux nombres à virgule flottante à double précision, ou davantage, où les circuits de calcul de différence d'exposants (150) sont présents dans un seul des deux blocs de traitement de signal numérique, DSP (118, 120) ;
un premier dispositif de décalage dans un premier bloc DSP (118) parmi les deux blocs DSP (118, 120), le premier dispositif de décalage étant configuré pour décaler une partie supérieure d'au moins un des deux nombres à virgule flottante à double précision, ou davantage, en fonction de la différence ;et
un deuxième dispositif de décalage dans un deuxième bloc DSP (120) parmi les deux blocs DSP (118, 120), le deuxième dispositif de décalage étant configuré pour décaler une partie inférieure d'au moins un des deux nombres à virgule flottante à double précision, ou davantage, en fonction de la différence,
les circuits d'alignement et d'ajout (130) étant configurés pour :
aligner une première partie des deux nombres à virgule flottante à double précision, ou davantage, dans le premier bloc DSP (118) parmi les deux blocs DSP (118, 120), chacun des deux blocs DSP (118, 120) comprenant des éléments qui permettent à chacun des deux blocs DSP (118, 120) de fonctionner individuellement sur des nombres à virgule flottante à simple précision, et où les deux blocs DSP (118, 120) sont individuellement incapables d'effectuer des opérations mathématiques sur des nombres à virgule flottante à double précision ;
aligner une deuxième partie des deux nombres à virgule flottante à double précision, ou davantage, dans le deuxième bloc DSP (120) parmi les deux blocs DSP ;
additionner les premières parties alignées des deux nombres à virgule flottante à double précision, ou davantage, pour générer une première somme partielle à l'aide d'un premier additionneur dans le premier bloc DSP (118) ; et
additionner les deuxièmes parties alignées des deux nombres à virgule flottante à double précision, ou davantage, pour générer une deuxième somme partielle à l'aide d'un deuxième additionneur dans le deuxième bloc DSP (120) ; et
un nœud de sortie configuré pour délivrer en sortie la première somme partielle et la deuxième somme partielle devant être concaténées ensemble pour former la somme.

10. Dispositif à circuit intégré (12) selon la revendication 9, comprenant des circuits de normalisation et d'arrondi (136) configurés pour :
normaliser la somme ; et
arrondir la somme normalisée.

11. Dispositif à circuit intégré (12) selon la revendication 10, dans lequel la normalisation de la somme comprend les étapes suivantes :
déterminer un nombre de zéros de tête dans la somme ; et
décaler la somme du nombre de zéros de tête afin de supprimer les zéros de tête.

12. Dispositif à circuit intégré (12) selon la revendication 11, dans lequel le décalage de la somme comprend les étapes suivantes :
décaler une première somme partielle correspondant à des chiffres supérieurs de la somme dans le premier dispositif de décalage dans le premier bloc DSP (118) parmi les deux blocs DSP (118, 120) ; et
décaler une deuxième somme partielle correspondant à des chiffres inférieurs dans la somme dans le deuxième dispositif de décalage dans le deuxième bloc DSP (120) parmi les deux blocs DSP (118, 120).
